**Europäisches Patentamt**

**European Patent Office**

**Office européen des brevets**

(19)

(11) Veröffentlichungsnummer: **0 204 895**
**B1**

(12) # EUROPÄISCHE PATENTSCHRIFT

(45) Veröffentlichungstag der Patentschrift:
**05.12.90**

(51) Int. Cl.⁵: **B09B 1/00**

(21) Anmeldenummer: **86103252.2**

(22) Anmeldetag: **11.03.86**

(54) Behälter für deponiefähige Abfälle.

(30) Priorität: **14.06.85 DE 3521947**

(43) Veröffentlichungstag der Anmeldung:
**17.12.86 Patentblatt 86/51**

(45) Bekanntmachung des Hinweises auf die Patenterteilung:
**05.12.90 Patentblatt 90/49**

(84) Benannte Vertragsstaaten:
**AT BE CH DE FR GB IT LI LU NL SE**

(56) Entgegenhaltungen:
**EP-A- 0 130 773**
**FR-A- 1 097 572**
**FR-A- 1 538 626**
**FR-A- 2 418 850**
**NL-A- 7 908 800**

**MÜLL UND ABFALL, Band 16, Nr. 12, Dezember 1984,
Seiten 356,358,359, Berlin, DE; K. WIEMER et al.:
"Konsequente Dichtung und Sanierung
problematischer Abfallablagerungen"
MÜLL UND ABFALL, Band 17, Nr. 6, Juni 1985,
Seiten 199-203, Berlin, DE; L. FENSCH et al.: "Die
Hochdeponie für Sondermüll, System Rollins - ein
neues Konzept für die Abfallbeseitigung"**

(73) Patentinhaber: **Philipp Holzmann AG, Taunusanlage 1,
D-6000 Frankfurt 1(DE)**

(72) Erfinder: **Schiffer, Will, Im Tannengrund 32,
D-3002 Wedemark(DE)**

(74) Vertreter: **Eikenberg & Brümmerstedt Patentanwälte,
Schackstrasse 1, D-3000 Hannover 1(DE)**

## Beschreibung

Die Erfindung betrifft einen Behälter aus Beton für deponiefähige Abfälle, der in das Erdreich eingebaut ist, mit einer oberen Abdeckung, mit einer flüssigkeitsundurchlässigen, korrosionsbeständigen Abdichtung zwischen dem Inneren des Behälters und der Behälter-Innenwand, und mit einem innerhalb oder außerhalb des Behälters angeordneten, von oben zugänglichen Schacht, der vom oberen Ende des Behälters bis unter dessen Sohle reicht, und der an seinem unteren Ende einen Sumpf enthält.

Die Deponierung von Abfällen ist ein wichtiger Zweig der Abfallwirtschaft. Die Suche nach sicheren Lagermöglichkeiten gewinnt immer mehr an Bedeutung. Bislang war es üblich, insbesondere für sogenannten Sondermüll, also stark umweltgefährdende Abfallstoffe, die in erster Linie aus dem industriellen Bereich, aber auch aus vielen anderen Bereichen stammen, in geologisch geeigneten Gebieten, vorzugsweise möglichst reinen Tonschichten, große Polder anzulegen. Lange Zeit galten solche Tonschichten als flüssigkeitsundurchlässig und chemisch resistent gegen alle Arten von aggressiven Stoffen. Wenn ein Polder gefüllt war, wurde er mit mehreren Schichten, ebenfalls im wesentlichen Tonschichten, verschlossen, um ihm von der Umwelt weitgehend hermetisch abzuschließen.

In letzter Zeit sucht man zunehmend nach anderen Lösungen, zum einen weil die Flüssigkeitsdichte von Tonschichten über viele Jahrzehnte Lagerzeit immer mehr in Frage gestellt wird und keine Möglichkeit besteht, durch ständige Kontrolle etwa austretende umweltgefährdende Stoffe festzustellen, so daß dann erst viel zu spät ein Austritt feststellbar ist, wenn bereits eine Verseuchung des Bodens und des Grundwassers stattgefunden hat. Zum anderen werden auch zunehmend neue Wege zum Recycling gefunden, so daß deshalb auch die Frage der leichteren Rückholbarkeit in den Vordergrund rückt.

Es ist bekannt, große überirdische Betonbehälter aufzustellen, die eine permanente Dichtigkeitskontrolle gestatten.

Abgesehen von der Gefährdung solcher Großbehälter durch äußere Einwirkungen, ist eine solche Lösung aus Landschaftsschutzgründen kaum möglich und sinnvoll, zumal Deponien dieser Art zur Erweiterung der Kapazität oft durch weitere Behälter aufgestockt werden müssen.

Aus der FR-A 1 538 626 ist ein in das Erdreich eingebauter Behälter aus Beton zur Aufnahme von Flüssigkeiten bekannt, dessen Innenfläche mit einer flüssigkeitsundurchlässigen, korrosionsbeständigen Abdichtung versehen ist. Innerhalb oder außerhalb des Behälters ist ein von oben zugänglicher Schacht angeordnet, der vom oberen Ende des Behälters bis unter dessen Sohle reicht, und an dessen unteren Ende sich ein Sumpf befindet. Dieser Sumpf steht über eine Rohrleitung mit einer den Behälter umgebenden oder in den Behälter eingebauten Schicht aus porösem Beton in Verbindung. Da die wasserundurchlässige Schicht unmittelbar auf der Innenwand des Behälters angebracht ist, können auftretende Leckstellen weder geortet noch beseitigt werden.

Aus der FR-A 2 418 850 ist ein Flüssigkeitsbehälter bekannt, der aus einem Innenbehälter zur Aufnahme der Flüssigkeit und einem im Abstand zum Innenbehälter angeordneten Außenbehälter besteht, wobei der Zwischenraum zwischen Innen- und Außenbehälter belüftet werden kann.

Ferner ist es aus dem Aufsatz "Konsequente Dichtung und Sanierung problematischer Abfallablagerungen" in der Zeitschrift "Müll und Abfall", Band 16, Nr. 12, Seite 356 bekannt, eine Deponie auf einer Betonplattform ruhen zu lassen, die mit einem begehbaren Kellerraum versehen ist.

Aufgabe der Erfindung ist es, einen in das Erdreich eingebauten Behälter aus Beton für deponiefähige Abfälle so auszubilden, daß er neben absoluter Dichtigkeit gegen den Austritt umweltgefährdender Stoffe eine permanente Kontrolle zum Aufspüren von Undichtigkeiten gewährleistet.

Diese Aufgabe wird erfindungsgemäß dadurch gelöst, daß die Abdichtung als Hülle ausgebildet ist, die einen Zwischenraum zur Behälter-Innenwand aufweist, daß der Zwischenraum in zahlreiche seitlich gegeneinander abgedichtete Kreisringabschnitte unterteilt ist, von denen je eine Rohrleitung zum Sumpf führt, daß jedes der Rohre in einem begehbaren Kontrollkanal verlegt ist, der vom begehbar ausgebildeten Schachtboden zum Zwischenraum führt, und daß eine unter der Abdeckung angeordnete, drehbare Beschickungsbühne vorgesehen ist.

Durch den erfindungsgemäßen Aufbau wird eine absolut zuverlässige und dauerhafte Abdichtung gegen aus dem Behälter in die Umgebung austretende Flüssigkeiten und umgekehrt gegen aus dem äußeren Erdbereich in den Behälter eintretendes Wasser erreicht, und zugleich bietet dieser Aufbau jederzeit eine wirksame Kontrolle der Dichtigkeit, um bei wider Erwarten doch auftretenden Undichtigkeiten schnell und gezielt geeignete Maßnahmen ergreifen zu können. Durch die Unterteilung in einzelne unabhängige Kreisringabschnitte läßt sich gezielt feststellen, in welchem Abschnitt eine Undichtigkeit aufgetreten ist, so daß dann auch schnell und gezielt entsprechende Gegenmaßnahmen getroffen werden können. Über die begehbaren Kontrollkanäle kann man schnell zu einem eventuellen undichten Bereich gelangen.

Vorzugsweise wird der Zwischenraum mit flüssigkeitsableitendem Material, z.B. mit Drainmatten ausgefüllt, so daß eventuell austretende Flüssigkeiten schnell zum Sumpf fließen können, wo durch geeignete Meßeinrichtungen ein Signal erzeugt werden kann, daß die Undichtigkeit meldet.

Die Hülle kann aus unterschiedlichen Werkstoffen bestehen. Eine Möglichkeit ist Metall, vorzugsweise V4A-Stahl, wobei die Hülle zur Erhöhung des Korrosionsschutzes innen mit Kunststoff oder einer Emaille-Schicht versehen werden kann.

Die Hülle kann aber auch aus einem keramischen Material oder aus Kunststoff bestehen.

Eine weitere Möglichkeit besteht darin, als Hülle ein mineralisches Material zu verwenden, das von einer Stützwand gehalten wird. Als mineralischer Werkstoff kann aufbereiteter Ton verwendet werden, der im Vergleich zum Normalton wesentlich dichter gegen Flüssigkeiten ist.

Es ist zweckmäßig, am unteren Ende des Schachtes einen zweiten Sumpf vorzusehen, der mit einer Außendrainage des Behälters verbunden ist. Dadurch kann auch an der Außenwand des Behälters anstehendes Oberflächenwasser gesammelt und abgepumpt werden.

Ein dritter Sumpf kann mit Öffnungen im Boden des Behälters in Verbindung stehen, so daß auch im Müll vorhandene oder sich durch chemische Reaktion bildende flüssige Stoffe aufgefangen, abgeführt und beseitigt werden können.

Die Entleerung der Sümpfe erfolgt dabei zweckmäßig über durch den Schacht nach oben geführte Rohrleitungen.

Bei großen Behältern mit einem Durchmesser von beispielsweise 80 m ist es von Vorteil, wenn der Schacht im Zentrum des Behälters angeordnet ist, so daß er das eine Auflager für die drehbare Beschickungsbühne und die obere Abdeckung bilden kann.

Im folgenden Soll die Erfindung anhand der Zeichnungen näher erläutert und weitere Ausgestaltungsmöglichkeiten beschrieben werden. Es zeigen:

Fig. 1 eine Ausführungsform eines erfindungsgemäßen Behälters im Schnitt,
Fig. 2 einen Schnitt entlang der Linie I-I in Fig. 1,
Fig. 3 einen Ausschnitt des Wandaufbaus des Behälters,
Fig. 4 einen Ausschnitt einer weiteren Ausführungsform eines Wandaufbaus.

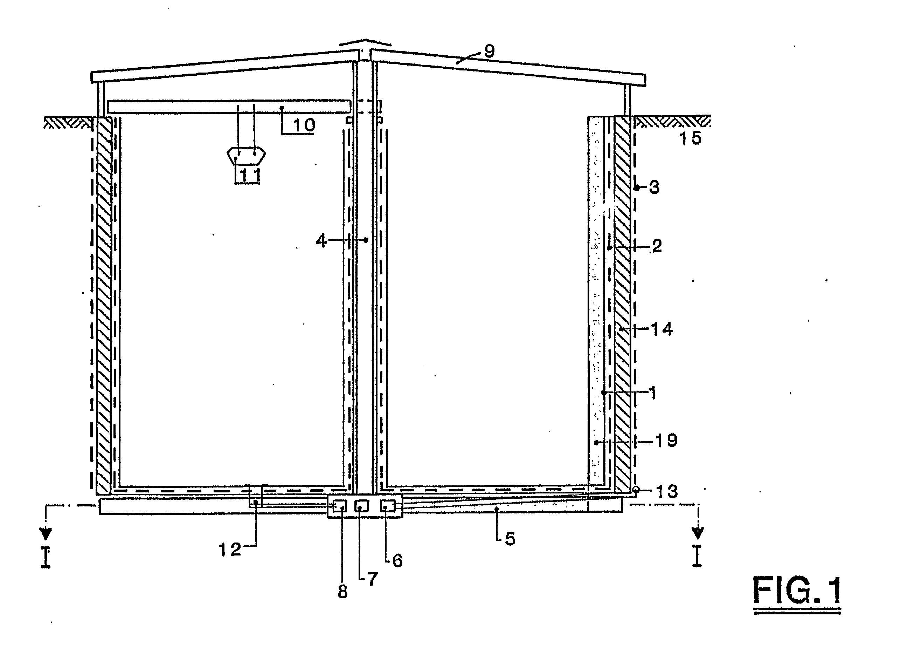

Fig. 1 zeigt einen erfindungsgemäß ausgebildeten Behälter, der vollständig in das Erdreich eingebaut ist, wobei die Erstellung der Behälterwand 14 in bekannter Weise aus in Abschnitte unterteilten Ringen von oben nach unten erfolgen kann. Der Einbau erfolgt vorzugsweise in geologischen Schichten, die zumindest im tieferen Bereich aus Ton oder ähnlichen mineralischen Schichten bestehen, die weitgehend wasserundurchlässig sind, denn andernfalls würde bei einer Tiefe des Behälters von z. B. 60 m das Grundwasser einen technisch mit vertretbarem Aufwand nicht zu beherrschenden Auftrieb verursachen. Der Boden der Behälter kann ebenfalls aus Beton bestehen, jedoch ist auch eine Ausbildung aus aufgearbeitetem Ton denkbar.

Der in Fig. 1 dargestellte Betonbehälter ist folgendermaßen aufgebaut. Innen befindet sich eine Hülle 1 aus einem flüssigkeitsundurchlässigen, korrosionsbeständigen Material, die einen Zwischenraum zur Behälterwand 14 bildet. Die Hülle kann aus Metall, vorzugsweise aus V4A-Stahl bestehen, wobei als zusätzliche Sicherheit innen eine Beschichtung mit Kunststoff oder Emaille vorgesehen werden kann.

Die Hülle kann aber auch aus Kunststoff oder aus einem keramischen Material bestehen. Der Zwischenraum zwischen der Hülle 1 und der Behälterwand 14 ist mit Dränmatten 2 ausgefüllt, so daß in den Zwischenraum eintretende Flüssigkeit zum Boden des Behälters hin abgeleitet wird. Zwischen der Außenseite der Behälterwand 14 und dem Erdreich 15 sind ebenfalls Dränmatten 3 vorgesehen, um an der Behälterwand anstehendes Oberflächenwasser ebenfalls nach unten abzuführen und einer Ringdrainageleitung 13 zuzuführen. Wenn nach vollständiger Füllung des Behälters das von außen zutretende Wasser nicht mehr abgepumpt werden soll, muß eine zweite Dichtungsschicht zwischen der Dränmatte 2 und der Behälterwand 14 vorgesehen werden.

In der Mitte des Behälters ist ein Schacht 4 vorgesehen, in den man von oben einsteigen kann, und der bis unter die Sohle des Behälters reicht. Das untere Ende des Schachtes ist begehbar und bildet einen Block, in dem schematisch drei Pumpensümpfe 6, 7 und 8 angedeutet sind.

Der Sumpf 7 ist beispielsweise über eine nicht dargestellte Rohrleitung mit der Ringleitung 13 verbunden, so daß sich in ihm das Oberflächenwasser ansammeln kann. Da hier die meiste Flüssigkeit anfällt, wird der Sumpf 7 entsprechend groß ausgebildet.

Der Sumpf 6 ist über nicht dargestellte Rohrleitungen, die in radialen Kontrollgängen 5 installiert sind, mit dem Zwischenraum verbunden. Die Kontrollgänge 5 verlaufen radial unterhalb der Sohle des Behälters vom Schacht 4 zum Zwischenraum, wobei der Zwischenraum in zahlreiche seitlich gegeneinander abgedichtete Kreisring-Abschnitte 20 unterteilt ist, wobei jedem der Abschnitte eine Rohrleitung zugeordnet ist. Am Pumpensumpf 6 kann also sofort eine Undichtigkeit der Hülle 1 festgestellt werden, z. B. durch geeignete Kontrollinstrumente im Pumpensumpf. Solche unter Umständen umweltgefährdenden Flüssigkeiten können dann entweder im Pumpensumpf 6 unschädlich gemacht werden oder aber durch den Schacht 4 nach oben gepumpt und gezielt beseitigt werden.

Im Pumpensumpf 8 schließlich können über im Behälterboden angebrachte Stutzen 12 aus dem Behälter-Inneren austretende Flüssigkeiten, die dort entweder durch chemische Reaktionen oder aber aufgrund von Restfeuchten auftreten, aufgefangen und ebenfalls gezielt abgeleitet werden.

Das Eintreten von Regenwasser wird durch die obere Abdeckung 9 zuverlässig vermieden. Diese Abdeckung 9 ist auf dem Schacht 4 einerseits und der Betonwand 14 des Behälters andererseits gelagert und kann nach vollständiger Füllung des Behälters demontiert und auf einem anderen Behälter erneut installiert werden. Wenn der Behälter gefüllt ist, wird er in bekannter Weise mit einer mineralischen Abdichtung gegen Flüssigkeitseintritt verschlossen.

Ebenfalls am Schacht 4 ist das eine Ende einer drehbaren Beschickungsbühne 10 gelagert, deren anderes Ende auf dem oberen Rand der Behälterwand 14 läuft. An der Beschickungsbühne 10 ist verfahrbar ein Container 11 angebracht, um den Behälter gleichmäßig füllen zu können. An die Beschickungsbühne kann ein Spezialcontainer angehängt werden, von dem aus täglich nach Arbeitsschluß eine dünne Schicht aus Polyurethan-Schaum auf den eingebrachten Müll aufgesprüht werden kann, um Geruchsbelästigungen zu verhindern.

Das untere Ende des Schachtes 4 und die unter der Sohle des Behälters befindlichen Kontroll-Kanäle 5 sind vollständig begehbar, so daß es jederzeit möglich ist, Kontrollen hinsichtlich der Dichtigkeit der Hülle durchzuführen und bei etwa auftretenden Undichtigkeiten diese vor Ort beseitigen zu können.

Bei dem dargestellten Ausführungsbeispiel ist der Schacht 4 im Zentrum des Behälters angeordnet, was bei großen Durchmessern des Behälters zweckmäßig ist. Der Schacht könnte jedoch auch außermittig oder sogar außerhalb des Behälters angeordnet werden.

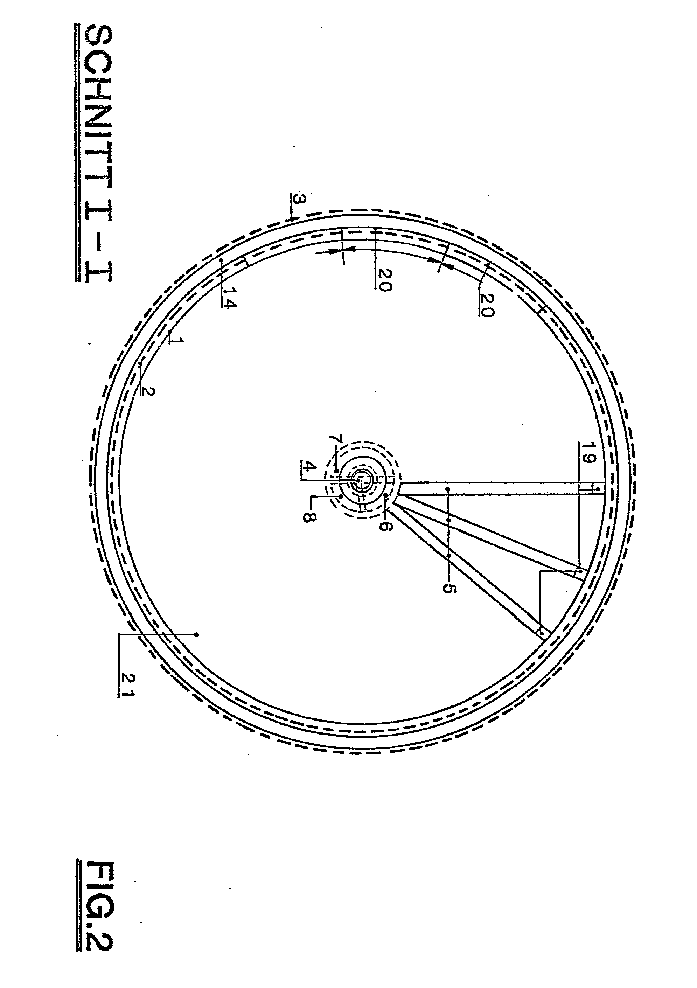

In Fig. 2 ist angedeutet, daß die Kontroll-Kanäle 5 an ihrem an der Hülle 1 mündenden Ende ebenfalls noch jeweils mit einem vertikalen, von oben besteigbaren Kontrollgang 19 in Verbindung stehen können.

In Fig. 2 ist ferner dargestellt, daß die Größe der Pumpensümpfe 6, 7, 8 den zu erwartendenden Flüssigkeitsmengen angepaßt werden kann, und daß der Pumpensumpf 7 die größten Abmessungen hat, weil in ihm der größte Anfall an Flüssigkeit zu erwarten ist.

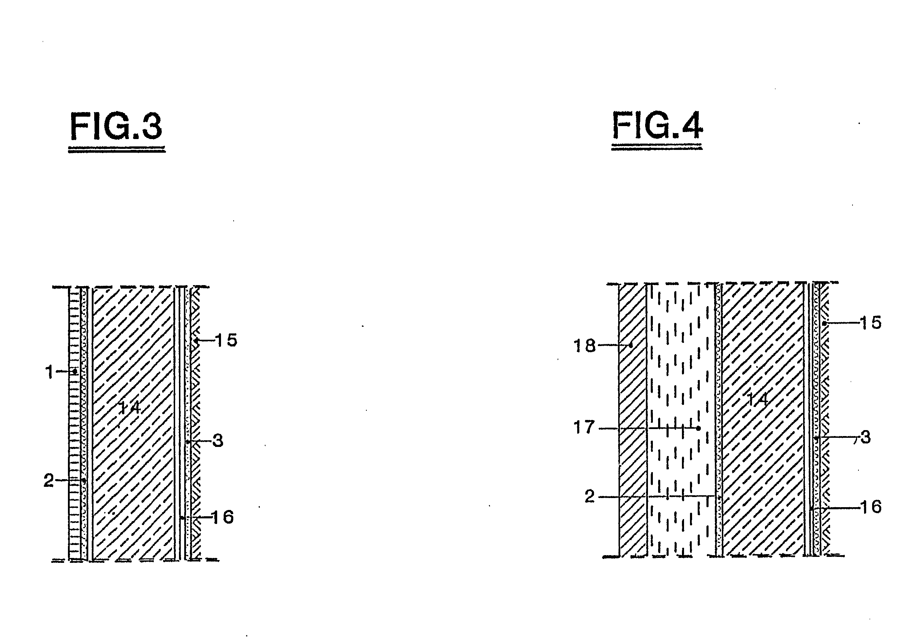

Fig. 3 zeigt einen möglichen Wandaufbau eines erfindungsgemäß ausgebildeten Behälters in größeren Einzelheiten. Von innen nach außen beginnt der Aufbau wiederum mit der Hülle 1, die aus den bereits oben erwähnten Materialien bestehen kann, darauf folgt ein Zwischenraum mit einer flüssigkeitsableitenden Schicht, z. B. einer Dränmatte. Die Betonwand 14 des Behälters kann noch zusätzlich mit einer äußeren Folie 16 aus Kunststoff gegen den äußeren, mit Dränmatten 3 ausgefüllten Zwischenraum abgedichtet sein. Die Dränmatten 3 grenzen unmittelbar an das umliegende Erdreich und dienen zur Ableitung von Oberflächenwasser in die Ringdrainage-Leitung 13.

Bei der in Fig. 4 dargestellten weiteren Variante eines möglichen Wandaufbaus besteht die Hülle aus einer Tonschicht 17 aus speziell aufbereitetem Ton, die nach innen durch eine Stützwand 18 stabilisiert wird. Ein solcher aufbereiteter Ton ist wesentlich flüssigkeitsundurchlässiger als natürlicher Ton. Im übrigen ist - wie bei Fig. 3 - eine Dränschicht 2 und eine zusätzliche Abdichtfolie 16 an der Außenseite als Begrenzung zum Erdreich 15 vorgesehen.

**Patentansprüche**

1. Behälter aus Beton für deponiefähige Abfälle, der in das Erdreich eingebaut ist, mit einer oberen Abdeckung (9) mit einer flüssigkeitsundurchlässigen, korrosionsbeständigen Abdichtung (1) zwischen dem Inneren des Behälters und der Behälter-Innenwand (14), und mit einem innerhalb oder außerhalb des Behälters angeordneten, von oben zugänglichen Schacht, der vom oberen Ende des Behälters bis unter dessen Sohle reicht, und der an seinem unteren Ende einen Sumpf (6) enthält, dadurch gekennzeichnet, daß die Abdichtung als Hülle (1) ausgebildet ist, die einen Zwischenraum zur Behälter-Innenwand (14) aufweist, daß der Zwischenraum in zahlreiche, seitlich gegeneinander abgedichtete Kreisringabschnitte (20) unterteilt ist, von denen je eine Rohrleitung zum Sumpf führt, daß jedes der Rohre in einem begehbaren Kontrollkanal (5) verlegt ist, der vom begehbar ausgebildeten Schachtboden zum Zwischenraum führt, und daß eine unter der Abdeckung angeordnete, drehbare Beschickungsbühne (10) vorgesehen ist.

2. Behälter nach Anspruch 1, dadurch gekennzeichnet, daß der Zwischenraum mit flüssigkeitsableitendem Material (2) ausgefüllt ist.

3. Behälter nach Anspruch 2, dadurch gekennzeichnet, daß das flüssigkeitsableitende Material aus Drainmatten (2) besteht.

4. Behälter nach einem der vorhergehenden Ansprüche, dadurch gekennzeichnet, daß die Hülle (1) aus Metall besteht.

5. Behälter nach Anspruch 4, dadurch gekennzeichnet, daß die Hülle (1) aus V4A-Stahl besteht.

6. Behälter nach Anspruch 4 oder 5, dadurch gekennzeichnet, daß die Hülle (1) innen mit Kunststoff beschichtet ist.

7. Behälter nach Anspruch 4 oder 5, dadurch gekennzeichnet, daß die Hülle (1) mit einer Emaille-Schicht versehen ist.

8. Behälter nach Anspruch 1 oder 2, dadurch gekennzeichnet, daß die Hülle (1) aus keramischem Material besteht.

9. Behälter nach Anspruch 1 oder 2, dadurch gekennzeichnet, daß die Hülle (1) durch eine mineralische, von einer Stützwand (18) gehaltene Abdichtung (17) gebildet ist.

10. Behälter nach Anspruch 1 oder 2, dadurch gekennzeichnet, daß die Hülle (1) aus Kunststoff besteht.

11. Behälter nach einem der vorhergehenden Ansprüche, dadurch gekennzeichnet, daß der Schacht (4) einen zweiten Sumpf (7) aufweist, der mit einer Außendrainage (13) des Behälters verbunden ist.

12. Behälter nach einem der vorhergehenden Ansprüche, dadurch gekennzeichnet, daß der Schacht (4) einen dritten Sumpf (7) aufweist, in den Öffnungen (12) im Boden (21) des Behälters münden.

13. Behälter nach einem der vorhergehenden Ansprüche, dadurch gekennzeichnet, daß der Schacht (4) im Zentrum des Behälters angeordnet ist und das ein Auflager für die drehbare Beschickungsbühne (10) und die obere Abdeckung (9) bildet.

14. Behälter nach einem der vorhergehenden Ansprüche, dadurch gekennzeichnet, daß die Sümpfe (6, 7, 8) über durch den Schacht (4) nach oben geführte Rohrleitungen entleerbar sind.

**Claims**

1. Concrete container for dumpable wastes which is installed in the earth, having an upper cover (9), having a liquid-impermeable, corrosion-resistant seal (1) between the inside of the container and the inner wall (14) of the container, and having a shaft which is arranged inside or outside the container, is accessible from above, extends from the upper end of the container to below its base and, at its lower end, contains a sump (6), characterized in that the seal is designed as an envelope (1) which exhibits an intermediate space with respect to the inner wall (14) of the container, in that the intermediate space is divided into a multiplicity of circular ring sections (20) which are sealed off laterally with respect to one another and from each of which there leads a pipe conduit to the sump, in that each of the pipes is laid in a passable monitoring passage (5) which leads from the shaft floor, which is designed to be passable, to the intermediate space, and in that a rotatable charging platform (10) arranged under the cover is provided.

2. Container according to Claim 1, characterized in that the intermediate space is filled with material (2) which conducts liquid away.

3. Container according to Claim 2, characterized in that the material which conducts liquid away comprises drainage mats (2).

4. Container according to one of the preceding claims, characterized in that the envelope (1) consists of metal.

5. Container according to Claim 4, characterized in that the envelope (1) consists of V4A steel.

6. Container according to Claim 4 or 5, characterized in that the envelope (1) is coated on the inside with plastic.

7. Container according to Claim 4 or 5, characterized in that the envelope (1) is provided with an enamel layer.

8. Container according to Claim 1 or 2, characterized in that the envelope (1) consists of ceramic material.

9. Container according to Claim 1 or 2, characterized in that the envelope (1) is formed by a mineral packing (17) held by a supporting wall (18).

10. Container according to Claim 1 or 2, characterized in that the envelope (1) consists of plastic.

11. Container according to one of the preceding claims, characterized in that the shaft (4) has a second sump (7) which is connected to an external drainage facility (13) of the container.

12. Container according to one of the preceding claims, characterized in that the shaft (4) has a third sump (7), into which openings (12) in the floor (21) of the container open.

13. Container according to one of the preceding claims, characterized in that the shaft (4) is arranged in the centre of the container and forms one support for the rotatable charging platform (10) and the upper cover (9).

14. Container according to one of the preceding claims, characterized in that the sumps (6, 7, 8) can be emptied via pipe conduits passed upwards through the shaft (4).

**Revendications**

1. Réservoir en béton pour déchets destinés à la décharge, qui est installé dans la terre, avec un couvercle (9), une couche étanche (1) imperméable, résistant à la corrosion située entre l'intérieur du réservoir et la paroi interne (14) du réservoir, et un puits accessible par le haut et monté à l'intérieur ou à l'extérieur du réservoir et qui va de l'extrémité haute du réservoir jusqu'à sous sa base et qui comprend un puisard (6) à son extrémité inférieure, caractérisé en ce que la couche étanche est formée d'une enveloppe (1), qui présente une chambre intermédiaire pour la paroi interne (14) du réservoir, en ce que la chambre intermédiaire est divisée en une pluralité de parties annulaires circulaires (20) d'où partent respectivement vers le puisard des conduites rigides, en ce que chacune des conduites est posée dans un canal de contrôle praticable (5) qui conduit du fond du puits, prévu praticable, à la chambre intermédiaire, et en ce que sous le couvercle est prévu une plate-forme (10) orientable.

2. Réservoir selon la revendication 1, caractérisé en ce que la chambre intermédiaire est remplie de matière (2) d'évacuation de liquide.

3. Réservoir selon la revendication 2, caractérisé en ce que la matière d'évacuation de liquide est en natte de drainage (2).

4. Réservoir selon l'une des revendications précédentes, caractérisé en ce que l'enveloppe (1) est en métal.

5. Réservoir selon la revendication 4, caractérisé en ce que l'enveloppe (1) est en acier-V4A.

6. Réservoir selon la revendication 4 ou 5, caractérisé en ce que l'enveloppe (1) est revêtue de matière plastique à l'intérieur.

7. Réservoir selon la revendication 4 ou 5, caractérisé en ce que l'enveloppe (1) est garnie d'une couche d'émail.

8. Réservoir selon la revendication 1 ou 2, caractérisé en ce l'enveloppe (1) est en matière céramique.

9. Réservoir selon la revendication 1 ou 2, caractérisé en ce que l'enveloppe (1) est formée d'une couche étanche minérale (17) maintenue par une paroi support (18).

10. Réservoir selon la revendication 1 ou 2, caractérisé en ce que l'enveloppe (1) est en matière plastique.

11. Réservoir selon l'une des revendications précédentes, caractérisé en ce que le puits (4) comporte un deuxième puisard (7) qui est relié à un drain extérieur (13) au réservoir.

12. Réservoir selon l'une des revendications précédentes, caractérisé en ce que le puits (4) comporte un troisième puisard (8) qui débouche dans une ouverture (12) du fond (21) du réservoir.

13. Réservoir selon l'une des revendications précédentes, caractérisé en ce que le puits (4) est au centre du réservoir et forme un support pour la plate-forme orientable (10) et le couvercle supérieur (9).

14. Réservoir selon l'une des revendications précédentes, caractérisé en ce que les puisards (6, 7, 8) sont vidangeables par les conduites rigides conduisant vers le haut par le puits.

FIG.1

EP 0 204 895 B1

SCHNITT I – I

FIG.2

**FIG.3**

**FIG.4**